# EUROPÄISCHE PATENTSCHRIFT

(11) **EP 3 228 484 B1**
(45) Veröffentlichungstag und Bekanntmachung des Hinweises auf die Patenterteilung: **11.12.2019**
(21) Anmeldenummer: 16163662.6
(22) Anmeldetag: 04.04.2016
(51) Int. Cl.: B60D 5/00, B61D 17/22, B62D 47/02

(54) **BALG EINES ÜBERGANGS ZWISCHEN ZWEI GELENKIG MITEINANDER VERBUNDENER FAHRZEUGE**
BELLOWS FOR THE TRANSITION BETWEEN TWO VEHICLES WITH A JOINTED CONNECTION
SOUFFLET D'UN PASSAGE ENTRE DEUX VÉHICULES LIÉS DE MANIÈRE ARTICULÉE

(43) Veröffentlichungstag der Anmeldung: 11.10.2017
(73) Patentinhaber: Hübner GmbH & Co. KG, 34123 Kassel (DE)
(72) Erfinder: Bingemann, Rolf, 37284 Waldkappel (DE)
(74) Vertreter: Patentanwälte Walther Hinz Bayer PartGmbB

(56) Entgegenhaltungen:
- EP-A1- 1 568 519
- EP-A1- 2 105 326
- DE-A1- 4 127 535

## Beschreibung

Die Erfindung betrifft einen Balg eines Übergangs zwischen zwei gelenkig miteinander verbundenen Fahrzeugteilen, wobei der Balg mindestens eine Rahmenvorrichtung aufweist, wobei die Rahmenvorrichtung mehrere hintereinander angeordnete einzelne Falten oder Wellen des Balges verbindende Balgrahmen umfasst, wobei die Rahmenvorrichtung zumindest partiell flammhemmend ausgebildet ist, wobei die Balgrahmen zumindest im Bodenbereich eine als Brandschutz wirkende Auflage aufweisen, wobei die Auflage als mit dem jeweiligen Balgrahmen verbindbares Profil ausgebildet ist.

Grundsätzlich unterschieden wird zwischen schienengebundenen Gelenkfahrzeugen, wie z. B. Straßenbahnzügen oder Eisenbahnzügen und straßengebundenen Gelenkfahrzeugen, wie z. B. Gelenkomnibussen. Die gelenkig miteinander verbundenen Fahrzeugteile, beispielsweise eines Schienenfahrzeugs oder eines Gelenkomnibusses, weisen einen Übergang auf, der mindestens einen Balg umfasst, der den Boden des Übergangs und gegebenenfalls auch das Gelenk tunnelförmig umgibt, um Personen über den Boden den Wechsel von dem einen Fahrzeugteil zum anderen Fahrzeugteil zu ermöglichen, ohne dass diese Witterungseinflüssen ausgesetzt sind. In diesem Zusammenhang ist anzumerken, dass die Bälge als Falten- oder Wellenbälge ausgebildet sind, wobei insbesondere Wellenbälge bei schienengebundenen Fahrzeugen und Faltenbälge bei Gelenkomnibussen zum Einsatz kommen.

Bei schienengebundenen Fahrzeugen, insbesondere Eisenbahnzügen, ist der Boden beispielsweise als Gliederbrücke ausgebildet. Derartige Gliederbrücken sind aus dem Stand der Technik hinreichend bekannt. Darüber hinaus ist auch bekannt, den Boden als Plattform auszubilden, wobei der Einsatz von Plattformen üblicherweise bei Gelenkomnibussen bekannt ist. Insbesondere bei Schienenfahrzeugen besteht nunmehr die Forderung, dass im Bereich des Übergangs der Boden des Übergangs, beispielsweise eine Gliederbrücke einen gewissen Widerstand gegen die Einwirkung von Feuer aufweist, dass heißt, dass auf der Oberseite des Bodens des Übergangs über einen bestimmten Zeitraum eine bestimmte Temperatur nicht überschritten werden soll.

Aus der EP1 568 519 A1 ist allerdings auch ein Balg bekannt, der unmittelbar auch als Übergangseinrichtung dient. D.h., dass hierbei die Personen über den Boden des Balges laufend zwischen den Fahrzeugteilen wechseln können; ein gesonderter Boden, z. B. eine Gliederbrücke oder eine Plattform, die einen Wechsel der Passagiere zwischen den Fahrzeugteilen ermöglicht, ist hier nicht vorgesehen. Ein solcher Balg weist Balgrahmen auf, wobei die Balgrahmen im Bodenbereich allerdings durch zusätzliche auf die Balgrahmen aufgesetzte Rahmen verstärkt sind, um das Gewicht der sich auf dem Boden des Balges befindlichen Personen tragen zu können.

Die DE 41 27 535 A1 beschreibt am Balgrahmen angeordnete Blattfedern, um die einzelnen Balgelemente bzw. dem Balg insgesamt eine gewisse Formstabilität zu vermitteln.

Die EP 2 105 326 A1 zeigt einen Balg, wobei die Balgrahmen des Balges Düsen zum Versprühen einer Flüssigkeit, insbesondere Wasser, aufweisen, um ein im Inneren des Balges entstandenes Feuer zu löschen.

Nun wurde bereits zu eingangs darauf hingewiesen, dass der Balg den Boden des Übergangs tunnelförmig umgibt, dass heißt, der Boden des Übergangs durch den Balg auch auf der Unterseite abgedeckt ist. Der Balg bildet somit eine Röhre. Das heißt, der Bodenbereich des Balges befindet sich unterhalb des Bodens des Überganges, beispielsweise einer Gliederbrücke. Der Brandherd befindet sich nun unterhalb des Bodenbereichs des Balges, sodass der Boden des Übergangs nicht unmittelbar dem Feuer ausgesetzt ist. Hieraus wird deutlich, dass mit einer brandhemmenden Ausgestaltung des Balges zumindest im Bodenbereich des Balges die Erwärmung des Bodens des Übergangs auf dessen Oberseite über einen bestimmten Zeitraum verzögert werden kann.

In diesem Zusammenhang ist beispielsweise aus der DE 20 2015 105 102 A1 der Aufbau eines Balges bekannt, wobei eine äußere Festigkeitslage vorgesehen ist, auf der auf der Innenseite eine Flammschutzlage angeordnet ist. Auf dieser Flammschutzlage kann wiederum eine weitere Festigkeitslage angeordnet sein.

Aus der EP 1 990 563 A1 ist ein zweilagiger Aufbau eines Balges bekannt, wobei die einzelnen Falten oder Wellen eines solchen Balges zur Bildung eines zweilagigen Aufbaus einen Außenmantel und einen Innenmantel aufweisen, die beabstandet zueinander angeordnet sind. Hierzu ist vorgesehen, zwischen Innenmantel und Außenmantel eine Brandschutzeinlage aus intumeszierendem Material anzuordnen. Mit einer solchen Ausgestaltung des Balges, insbesondere des Balgbodens, sind bereits gute Ergebnisse hinsichtlich einer verzögerten Erwärmung auf der Oberseite des Bodens des Balgübergangs erzielt worden.

Allerdings sind die Anforderungen an den Brandschutz in den letzten Jahren gesteigert worden, wobei insbesondere der Zeitraum innerhalb der eine bestimmte Temperatur auf der Oberseite des Bodens des Übergangs nicht überschritten werden kann, erhöht wurde.

Wie bereits oben dargestellt, sind verschiedenen Maßnahmen getroffen worden, um die Brandbeständigkeit des Balges zu erhöhen mit dem Ziel, eine direkte Beflammung des Bodens des Überganges über einen möglichst langen Zeitraum zu vermeiden, mit dem Ziel, die Oberflächentemperatur auf der Oberseite des Bodens des Übergangs nicht über einen vorbestimmten Wert innerhalb eines bestimmten Zeitraumes ansteigen zu lassen.

Die Bälge weisen Balgrahmen auf, wobei durch die Balgrahmen einzelne Wellen eines Wellenbalges oder Falten eines Faltenbalges miteinander verbunden sind. Die Balgrahmen umgeben entsprechend der Kontur des Balges den Übergangsboden und gegebenenfalls auch die gelenkige Verbindung röhren- oder tunnelförmig. Bei einem Faltenbalg sind die Rahmen üblicherweise auf der Außenseite des Balges angeordnet. Gleiches gilt bei sogenannten Negativwellenbälgen, wobei sich solche Negativwellen bei einem Außenwellenbalg dadurch auszeichnen, dass die Wellen in Richtung auf die Mittellängsachse des Fahrzeugs zugewölbt sind; die Balgrahmen befinden sich hierbei entsprechend auf der Außenseite. Das heißt, sowohl bei einem Negativwellenbalg, als auch bei einem Faltenbalg sind die Balgrahmen, die insbesondere aus Aluminium und im Querschnitt U-förmig ausgebildet sind, der direkten Beflammung ausgesetzt. Hieraus wird deutlich, dass die Balgrahmen hohen thermischen Belastungen ausgesetzt sind. Dies kann in Einzelfällen sogar dazu führen, dass die Schmelztemperatur des Balgrahmens aus Aluminium überschritten wird, und die Balgrahmen vollständig schmelzen. Dies führt unmittelbar zu einem Zusammenbruch der Wärmeschutz bildenden Balgstruktur. Ist dies geschehen, ist der Boden des Übergangs in der Regel einer direkten Beflammung ausgesetzt, was dazu führt, dass innerhalb kürzester Zeit die max. zulässigen Oberflächentemperaturen auf dem Boden des Übergangs überschritten werden.

In gleicher Weise hohen thermischen Belastungen ausgesetzt ist auch der Mittelrahmen eines Balges. Der Mittelrahmen eines Balges verbindet zwei Balghälften, und folgt ebenfalls der Kontur des Balges als solcher, das heißt, der Mittelrahmen ist ringartig ausgebildet. Insofern ist der Mittelrahmen auch einer unmittelbaren Beflammung ausgesetzt. Der Mittelrahmen weist üblicherweise auf seiner Unterseite eine sich parallel zum Mittelrahmen erstreckende Traverse auf, mit welcher sich der Mittelrahmen, und damit der Balg, auf der gelenkigen Verbindung zwischen den beiden Fahrzeugteilen abstützt. Auch der Mittelrahmen ist üblicherweise aus Aluminium hergestellt.

Die der Erfindung zugrunde liegende Aufgabe besteht nunmehr darin, die thermische Belastung des Balges über die Rahmenvorrichtung, die einerseits durch die Balgrahmen gebildet sein kann, und andererseits durch den Mittelrahmen, zu vermindern.

Zur Lösung der Aufgabe wird erfindungsgemäß vorgeschlagen, dass das Profil eine Brandschutzbeschichtung aufweist, wobei die Brandschutzbeschichtung als unter Einwirkung von Wärme aufblähendes Material ausgebildet ist. Das heißt, dass die aus Aluminium hergestellten Balgrahmen eine Auflage besitzen, die als Brandschutz wirkt und damit die Balgrahmen flammhemmend ausgerüstet sind. Durch eine solche flammhemmende Ausrüstung der Balgrahmen der Rahmenvorrichtung wird eine signifikante Verminderung der thermischen Belastung des Balges insgesamt erreicht. Dies führt dazu, dass die den Wärmeschutz bildende Balgstruktur über einen längeren Zeitraum erhalten bleibt und als Folge davon, dass die Oberflächentemperatur auf der Oberseite des Bodens des Übergangs über einen längeren Zeitraum einen bestimmten Wert nicht überschreitet.

Weitere vorteilhafte Merkmale und Ausgestaltungen der Erfindung sind den Unteransprüchen zu entnehmen.

Die Auflage, die als mit dem jeweiligen Balgrahmen verbindbares Profil ausgebildet ist, das die Brandschutzbeschichtung aufweist, kann hierbei vorzugsweise lösbar, und hier insbesondere klemmbar lösbar mit dem Balgrahmen verbindbar sein, um einen Austausch bei Verschleiß, z. B. durch

Umgebungseinflüsse, wie Steinschlag, zu ermöglichen. Ein solches Profil wird auch als Übersetzprofil bezeichnet.

Es wurde bereits zu eingangs darauf hingewiesen, was unter einem Negativbalg zu verstehen ist. Ein flammgeschützter Balgrahmen ist insbesondere bei einem solchen Negativbalg von Vorteil, da bei einem Negativbalg als Außenbalg die Balgrahmen auf der Außenseite des Balges angeordnet sind, wohingegen die die Balgrahmen verbindenden Wellen nach innen gewölbt sind. Grundsätzlich einsetzbar ist die Erfindung allerdings auch bei einem Positivwellenbalg als Außenbalg, bei dem die Wellen in Richtung der Fahrzeugaußenseite gewölbt ausgebildet sind.

Ist die Rahmenvorrichtung als Mittelrahmen eines zweigeteilten Balges ausgebildet, ist vorgesehen, dass der Mittelrahmen zumindest im Bodenbereich auf seiner Außenseite eine als Brandschutz wirkende Auflage aufweist. Hierdurch wird erreicht, dass der Mittelrahmen in gleicher Weise wie die Balgrahmen nicht als Wärmebrücke fungiert.

Nach einem weiteren Merkmal der Erfindung kann vorgesehen sein, dass der Mittelrahmen im Bodenbereich eine Traverse zur Abstützung auf der gelenkigen Verbindung zwischen zwei Fahrzeugen aufweist, die zumindest auf ihrer Außenseite eine als Brandschutz wirkende Auflage aufweist. Die Auflage sowohl auf dem Mittelrahmen als auch auf der Traverse umfasst mindestens eine Platte, auf der eine Brandschutzbeschichtung angeordnet ist, wobei die Brandschutzbeschichtung insbesondere auf der Außenseite der Platte angeordnet ist.

Die mindestens eine Platte selbst ist zumindest auf der nach außen gerichteten Stirnlängsseite des Mittelrahmens oder der Traverse angeordnet Unter "außen" wird die Seite, die in Richtung der Fahrzeugaußenseite zeigt, verstanden.

Die Brandschutzbeschichtung selbst ist als ein unter Einwirkung von Wärme aufblähbares Material, insbesondere als ein unter Druck aufblähendes Material ausgebildet. Ein solches intumeszierendes Material bildet nach einem weiteren Merkmal der Erfindung nach dem Blähvorgang ein Aschegerüst oder Ascheskelett, das als Wärmedämmschicht fungiert. Es ist bekannt, dass die Balgrahmen in neutraler Stellung des Fahrzeugs nur wenige Zentimeter Abstand zueinander aufweisen. Sind die Balgrahmen nunmehr im Bereich des Balgbodens mit einem Profil versehen, dass eine Brandschutzbeschichtung aufweist, die insbesondere unter Druck aufblähend ausgebildet ist, dann kommt es während des Blähvorganges zu einer brückenartigen Verbindung der benachbarten Profile bzw. der benachbarten Balgrahmen durch ein sich zwischen den Balgrahmen ausbildendes Aschegerüst, wobei ein solches Aschegerüst über eine gewisse Zeit nicht nur eine direkte Beflammung der Balgrahmen verhindert, sondern auch der Wellen eines Negativwellenbalges oder der Falten eines Faltenbalges, die sich von der Außenseite des Fahrzeugs aus gesehen hinter der Aschestruktur befinden. Ein solches unter Druck aufbauendes Ascheskelett ist auch verhältnismäßig stabil, da anderes als bei drucklos aufblähenden Materialien ein solches unter Druck aufblähendes Material auch unter Feuchtigkeitseinfluss nicht zur Bildung von Ausflockungen neigt. Denn Ausflockungen im Ascheskelett bewirken eine Verminderung der Stabilität des Ascheskeletts.

Gegenstand der Erfindung ist auch ein Übergang zwischen zwei gelenkig miteinander verbundenen Fahrzeugen, der sich erfindungsgemäß durch einen Balg gemäß einem oder mehrerer der Ansprüche 1 bis 14 auszeichnet.

Anhand der Zeichnungen wird die Erfindung beispielhaft näher erläutert.
- Fig. 1: zeigt ein Gelenkfahrzeug mit zwei Fahrzeugteilen;
- Fig. 2: zeigt einen Ausschnitt eines Negativbalges gemäß dem Balg aus Fig. 1;
- Fig. 3: zeigt eine Darstellung gemäß Fig. 2, wobei zwischen den Balgrahmen ein Ascheskelett ausgebildet worden ist;
- Fig. 4: zeigt schematisch den Bodenbereich eines Übergangs, wobei der Wellenbalg durch einen Mittelrahmen zweigeteilt ist;
- Fig. 5: zeigt eine Ansicht gemäß der Linie V-V aus Fig. 4.

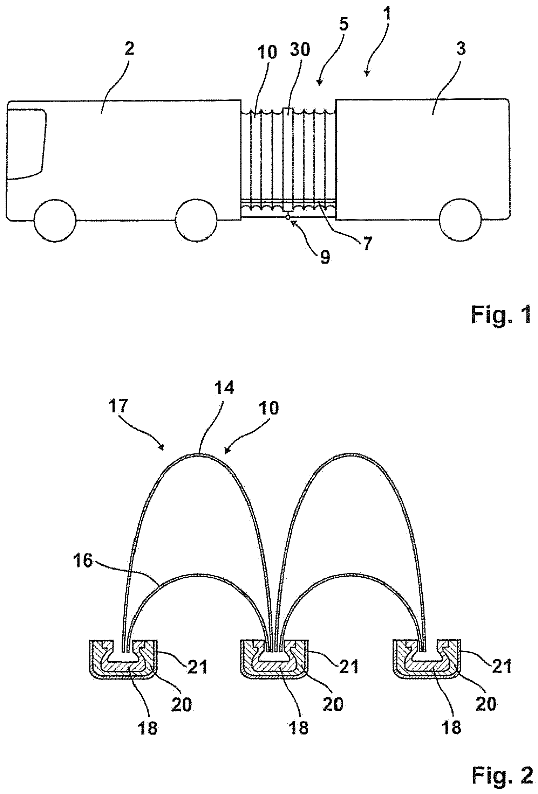

Das Gelenkfahrzeug 1 gemäß der Fig. 1 umfasst die beiden Fahrzeugteile 2, 3, die durch den mit 5 bezeichneten Übergang miteinander verbunden sind. Der Übergang 5 umfasst den Negativwellenbalg 10, der mittig durch den Mittelrahmen 30 in zwei gleiche Hälften geteilt ist. Der Balg 10 umgibt den Boden 7 des Übergangs sowie die unter dem Boden befindliche gelenkige Verbindung 9 tunnel- oder röhrenförmig. Der Balg stützt sich hierbei durch den Mittelrahmen auf der gelenkigen Verbindung 9 ab.

Fig. 2 zeigt einen Ausschnitt aus dem Balg 10 gemäß Fig. 1 in vergrößerter Darstellung. Der Balg ist insofern als Negativdoppelwellenbalg ausgebildet, als die Wellen des Balges einen inneren Mantel 14 und einen äußeren Mantel 16 aufweisen, wobei durch die im Querschnitt U-förmig ausgebildeten Balgrahmen 18 die aus dem Innenmantel 14 und dem Außenmantel 16 ausgebildeten Wellen 17 verbunden sind. Auf den im Querschnitt U-förmig ausgebildeten Balgrahmen 18 befindet sich das mit einer Brandschutzbeschichtung 21 versehene Profil 20, das lösbar, insbesondere klemmbar lösbar auf dem jeweiligen Balgrahmen 18 aufsitzt.

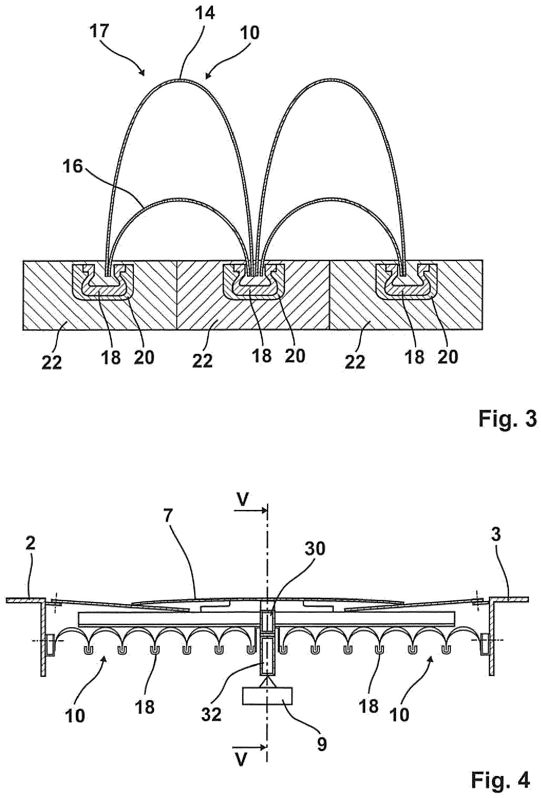

Unter Wärmeeinwirkung bläht die Brandschutzbeschichtung 21, wie in Fig. 3 dargestellt, unter Bildung eines Aschegerüstes oder Ascheskelettes 22 auf, das nicht nur den mit 18 bezeichneten Balgrahmen schützt, sondern auch durch die Brückenbildung zwischen den einzelnen Balgrahmen den Außenmantel 16 des Doppelwellenbalges ebenfalls vor direkter Beflammung schützt.

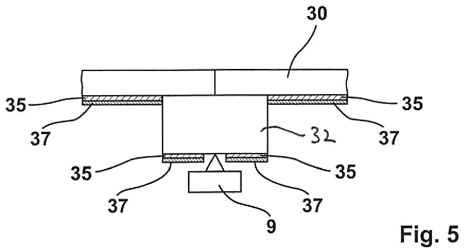

Gegenstand der Fig. 4 und der Fig. 5 ist der Schutz des Mittelrahmens 30 sowie der auf dem Mittelrahmen 30 aufsitzenden Traverse 32 vor unmittelbarer Wärmeeinwirkung durch Beflammung. Der Mittelrahmen 30, durch den der Balg 10 zweigeteilt ist, wird, wie sich dies unmittelbar aus der schematischen Darstellung gemäß Fig. 5 ergibt, ebenfalls vor unmittelbarer Beflammung geschützt. Auf der Außenseite des Mittelrahmens, insbesondere im Bodenbereich des Mittelrahmens, weist der Mittelrahmen auf der Längsstirnseite Platten 35 auf, die auf der Außenseite mit einer Brandschutzbeschichtung 37 versehen sind. Gleiches gilt für die Traverse 32, die ebenfalls auf ihrer Längsstirnseite solche Platten 35 mit einer ebensolchen Beschichtung 37 aufweist. Die Platten können allerdings nicht nur auf der Längsstirnseite sowohl des Mittelrahmens 30, als auch der Traverse 32 angeordnet sein, sondern auch im Seitenwandbereich sowohl der Traverse als auch des Mittelrahmens.

Es wurde bereits an anderer Stelle hinreichend deutlich gemacht, dass das Brandschutzmaterial der Brandschutzbeschichtung ein solches ist, dass unter Wärmeeinwirkung aufblähend, und insbesondere unter Druck aufblähend ausgebildet ist. Ein solches intumeszierendes Material ist unter der Bezeichnung "Exterdens" oder auch "Interdens" von der Firma Dr. Wohlmann GmbH, DE 76547 Sinnsheim, erhältlich.

### Bezugszeichenliste:

- 1: Gelenkfahrzeug
- 2: Fahrzeugteil
- 3: Fahrzeugteil
- 5: Übergang
- 7: Boden
- 9: gelenkige Verbindung
- 10: Balg
- 14: innerer Mantel
- 16: äußerer Mantel
- 17: Wellen
- 18: Balgrahmen
- 20: Profil
- 21: Brandschutzbeschichtung
- 22: Ascheskelett
- 30: Mittelrahmen
- 32: Traverse
- 35: Platte
- 37: Brandschutzbeschichtung

## Patentansprüche

1. Balg (10) eines Übergangs (5) zwischen zwei gelenkig miteinander verbundenen Fahrzeugteilen (2, 3), wobei der Balg (10) mindestens eine Rahmenvorrichtung aufweist,
wobei die Rahmenvorrichtung mehrere hintereinander angeordnete einzelne Falten oder Wellen des Balges (10) verbindende Balgrahmen umfasst,
wobei die Rahmenvorrichtung zumindest partiell flammhemmend ausgebildet ist,
wobei die Balgrahmen (18) zumindest im Bodenbereich eine als Brandschutz wirkende Auflage aufweisen,
wobei die Auflage als mit dem jeweiligen Balgrahmen (18) verbindbares Profil (20) ausgebildet ist,
**dadurch gekennzeichnet,**
**dass**
das Profil (20) eine Brandschutzbeschichtung (21) aufweist die als ein unter Einwirkung von Wärme aufblähendes Material ausgebildet ist.

2. Balg (10) eines Übergangs (5) zwischen zwei gelenkig miteinander verbundenen Fahrzeugteilen (2, 3) nach Anspruch 1,
**dadurch gekennzeichnet,**
**dass** das Profil (20) mit dem Balgrahmen (18) lösbar, insbesondere klemmbar lösbar, verbindbar ist.

3. Balg (10) eines Übergangs (5) zwischen zwei gelenkig miteinander verbundenen Fahrzeugteilen (2, 3) nach einem der Ansprüche 1 oder 2,
**dadurch gekennzeichnet,**
**dass** die Balgrahmen (18) der Rahmenvorrichtung auf der Außenseite des Balges (10) angeordnet sind.

4. Balg (10) eines Übergangs (5) zwischen zwei gelenkig miteinander verbundenen Fahrzeugteilen (2, 3) nach einem der voranstehenden Ansprüche,
**dadurch gekennzeichnet,**
**dass** die Rahmenvorrichtung durch den Mittelrahmen (12) eines zweigeteilten Balges (10) gebildet ist, wobei der Mittelrahmen (12) zumindest im Bodenbereich auf seiner Außenseite eine als Brandschutz wirkende Auflage aufweist.

5. Balg (10) eines Übergangs (5) zwischen zwei gelenkig miteinander verbundenen Fahrzeugteilen (2, 3) nach Anspruch 4,
**dadurch gekennzeichnet,**
**dass** der Mittelrahmen (12) im Bodenbereich eine Traverse (32) zur Abstützung auf der gelenkigen Verbindung zwischen zwei Fahrzeugteilen (2, 3) aufweist, wobei die Traverse (32) zumindest auf ihrer Außenseite eine als Brandschutz wirkende Auflage aufweist.

6. Balg (10) eines Übergangs (5) zwischen zwei gelenkig miteinander verbundenen Fahrzeugteilen (2, 3) nach Anspruch 4 oder 5,
**dadurch gekennzeichnet,**
**dass** die Auflage mindestens eine Platte (35) umfasst, die eine Brandschutzbeschichtung (37) aufweist.

7. Balg (10) eines Übergangs (5) zwischen zwei gelenkig miteinander verbundenen Fahrzeugteilen (2, 3) nach Anspruch 6,
**dadurch gekennzeichnet,**
**dass** im an dem Mittelrahmen (12) und/oder an der Traverse (32) angebauten Zustand der mindestens einen Platte (35), die Brandschutzbeschichtung (37) auf der Außenseite der Platte (35) angeordnet ist.

8. Balg (10) eines Übergangs (5) zwischen zwei gelenkig miteinander verbundenen Fahrzeugteilen (2, 3) nach Anspruch 6 oder 7,
**dadurch gekennzeichnet,**
**dass** die mindestens eine Platte (35) zumindest auf der nach außen gerichteten Stirnlängsseite des Mittelrahmens (12) oder der Traverse (32) angeordnet ist.

9. Balg (10) eines Übergangs (5) zwischen zwei gelenkig miteinander verbundenen Fahrzeugteilen (2, 3) nach mindestens einem der Ansprüche 6 bis 8,
**dadurch gekennzeichnet,**
**dass** die Brandschutzbeschichtung (37) als ein unter Einwirkung von Wärme aufblähendes Material ausgebildet ist.

10. Balg (10) eines Übergangs (5) zwischen zwei gelenkig miteinander verbundenen Fahrzeugteilen (2, 3) nach Anspruch 1 oder 9,
**dadurch gekennzeichnet,**
**dass** das Material unter Druck aufblähend ausgebildet ist.

11. Balg (10) eines Übergangs (5) zwischen zwei gelenkig miteinander verbundenen Fahrzeugteilen (2, 3) nach Anspruch 1 oder 9 oder 10,
**dadurch gekennzeichnet,**
**dass** das Material unter Bildung eines Aschegerüsts (22) aufblähend ausgebildet ist.

12. Balg (10) eines Übergangs (5) zwischen zwei gelenkig miteinander verbundenen Fahrzeugteilen (2, 3) nach einem der Ansprüche 1 oder 9 bis 11,
**dadurch gekennzeichnet,**
**dass** das Material feuchtigkeitsresistent ist.

13. Übergang (5) zwischen zwei gelenkig miteinander verbundenen Fahrzeugen (2, 3),
**gekennzeichnet durch**
einen Balg (10), der gemäß einem oder mehreren der Ansprüche 1 bis 12 ausgebildet ist.

## Claims

1. A bellows (10) of a gangway (5) between two articulately connected vehicle parts (2, 3), wherein the bellows (10) comprises at least one frame device,
wherein the frame device includes several bellows frames connecting successively disposed individual folds or corrugations of the bellows (10),
wherein the frame device is designed to be at least partially flame-retardant,
wherein the bellows frames (18) have a support acting as a fire protection at least in the area of the floor,
wherein the support is designed as a profile (20) that can be joined with the respective bellows frame (18),
**characterized in that**
the profile (20) comprises a fire protection coating (21), which is designed as a material inflating under the action of heat.

2. The bellows (10) of a gangway (5) between two articulately connected vehicle parts (2, 3) according to claim 1,
**characterized in that**
the profile (20) can be joined with the bellows frame (18) in a detachable, in particular clampably detachable manner.

3. The bellows (10) of a gangway (5) between two articulately connected vehicle parts (2, 3) according to one of the claims 1 or 2, **characterized in that**
the bellows frames (18) of the frame device are disposed on the outer side of the bellows (10).

4. The bellows (10) of a gangway (5) between two articulately connected vehicle parts (2, 3) according to one of the aforementioned claims,
**characterized in that**
the frame device is formed by the middle frame (12) of a two-part bellows (10), wherein the middle frame (12) comprises a support acting as a fire protection at least in the area of the floor on its outer side.

5. The bellows (10) of a gangway (5) between two articulately connected vehicle parts (2, 3) according to claim 4,
**characterized in that**
the middle frame (12) comprises a traverse (32) in the floor area for support on the articulated connection between two vehicle parts (2, 3), wherein the traverse (32) comprises a support acting as a fire protection at least on its outer side.

6. The bellows (10) of a gangway (5) between two articulately connected vehicle parts (2, 3) according to claim 4 or 5,
**characterized in that**
the support includes at least one plate (35) that comprises a fire protection coating (37).

7. The bellows (10) of a gangway (5) between two articulately connected vehicle parts (2, 3) according to claim 6,
**characterized in that**
in a state in which the at least one plate (35) is attached to the middle frame (12) and/or the traverse (32), the fire protection coating (37) is disposed on the outer side of the plate (35).

8. The bellows (10) of a gangway (5) between two articulately connected vehicle parts (2, 3) according to claim 6 or 7,
**characterized in that**
the at least one plate (35) is disposed at least on the outward frontal longitudinal side of the middle frame (12) or of the traverse (32).

9. The bellows (10) of a gangway (5) between two articulately connected vehicle parts (2, 3) according to at least one of the claims 6 to 8,
**characterized in that**
the fire protection coating (37) is designed as a material inflating under the action of heat.

10. The bellows (10) of a gangway (5) between two articulately connected vehicle parts (2, 3) according claim 1 or 9,
**characterized in that**
the material is designed to inflate under pressure.

11. The bellows (10) of a gangway (5) between two articulately connected vehicle parts (2, 3) according claim 1 or 9 or 10,
**characterized in that**
the material is designed to inflate, while forming a cinder structure (22).

12. The bellows (10) of a gangway (5) between two articulately connected vehicle parts (2, 3) according one of the claims 1 or 9 to 11,
**characterized in that**
the material is moisture-resistant.

13. A gangway (5) between two articulately connected vehicles (2, 3),
**characterized by**
a bellows (10) that is designed according to one or several of the claims 1 to 12.

## Revendications

1. Soufflet (10) d'une passerelle (5) d'intercirculation entre deux parties de véhicule (2, 3) reliées de manière articulée, où le soufflet (10) comporte au moins un assemblage de cadre,
où l'assemblage de cadre comprend plusieurs cadres de soufflet disposés les uns à la suite des autres et reliant des plis ou ondulations individuelles du soufflet (10),
où l'assemblage de cadre est formé de manière au moins partiellement ignifugé,
où les cadres de soufflet (18) comportent, du moins dans la région du sol, un support agissant comme un pare-feu,
où le support prend la forme d'un profilé (20) pouvant être relié au cadre de soufflet (18) respectif,
**caractérisé en ce que**
le profilé (20) comporte un revêtement ignifuge (21) qui prend la forme d'un matériau qui se gonfle sous l'effet de la chaleur.

2. Soufflet (10) d'une passerelle (5) entre deux parties de véhicule (2, 3) reliées de manière articulée selon la revendication 1,
**caractérisé en ce que**
le profilé (20) peut être relié de manière détachable, en particulier de manière serrable et détachable, avec le cadre de soufflet (18).

3. Soufflet (10) d'une passerelle (5) entre deux parties de véhicule (2, 3) reliées de manière articulée selon l'une des revendications 1 ou 2, **caractérisé en ce que**
les cadres de soufflet (18) de l'assemblage de cadre sont disposés sur le côté extérieur du soufflet (10).

4. Soufflet (10) d'une passerelle (5) entre deux parties de véhicule (2, 3) reliées de manière articulée selon l'une des revendications précédentes,
**caractérisé en ce que**
l'assemblage de cadre est formé par le cadre central (12) d'un soufflet (10) divisé en deux parties, où le cadre central (12) comporte, du moins dans la région du sol, sur son côté extérieur, un support agissant comme un pare-feu.

5. Soufflet (10) d'une passerelle (5) entre deux parties de véhicule (2, 3) reliées de manière articulée selon la revendication 4,
**caractérisé en ce que**
le cadre central (12) comporte dans la région du sol une traverse (32) pour s'appuyer sur la connexion articulée entre deux parties de véhicule (2, 3), où la traverse (32) comporte, du moins sur son côté extérieur, un support agissant comme un pare-feu.

6. Soufflet (10) d'une passerelle (5) entre deux parties de véhicule (2, 3) reliées de manière articulée selon la revendication 4 ou 5,
**caractérisé en ce que**
le support comprend au moins une plaque (35) qui comporte un revêtement ignifuge (37).

7. Soufflet (10) d'une passerelle (5) entre deux parties de véhicule (2, 3) reliées de manière articulée selon la revendication 6,
**caractérisé en ce que**
quand l'au moins une plaque (35) est à l'état monté sur le cadre central (12) et/ou sur la traverse (32), le revêtement ignifuge (37) est disposé sur le côté extérieur de la plaque (35).

8. Soufflet (10) d'une passerelle (5) entre deux parties de véhicule (2, 3) reliées de manière articulée selon la revendication 6 ou 7,
**caractérisé en ce que**
l'au moins une plaque (35) est disposée au moins sur le côté longitudinal frontal orienté vers l'extérieur du cadre central (12) ou de la traverse (32).

9. Soufflet (10) d'une passerelle (5) entre deux parties de véhicule (2, 3) reliées de manière articulée selon au moins une des revendications 6 à 8,
**caractérisé en ce que**
le revêtement ignifuge (37) prend la forme d'un matériau qui gonfle sous l'effet de la chaleur.

10. Soufflet (10) d'une passerelle (5) entre deux parties de véhicule (2, 3) reliées de manière articulée selon la revendication 1 ou 9,
**caractérisé en ce que**
le matériau est conçu pour gonfler sous la pression.

11. Soufflet (10) d'une passerelle (5) entre deux parties de véhicule (2, 3) reliées de manière articulée selon la revendication 1 ou 9 ou 10,
**caractérisé en ce que**
le matériau est conçu pour gonfler en formant une structure en cendres (22).

12. Soufflet (10) d'une passerelle (5) entre deux parties de véhicule (2, 3) reliées de manière articulée selon l'une des revendications 1 ou 9 à 11,
**caractérisé en ce que**
le matériau est résistant à l'humidité.

13. Passerelle (5) d'intercirculation entre deux véhicules (2, 3) reliés de manière articulée,
**caractérisée par**
un soufflet (10) configuré selon une ou plusieurs des revendications 1 à 12.
